# EUROPÄISCHE PATENTSCHRIFT

(11) **EP 1 097 074 B1**
(45) Veröffentlichungstag und Bekanntmachung des Hinweises auf die Patenterteilung: **27.03.2002**
(21) Anmeldenummer: 99939404.2
(22) Anmeldetag: 23.07.1999
(51) Int. Cl.: B60T 13/68

(54) **BETÄTIGUNGSVORRICHTUNG FÜR EINE ELEKTROHYDRAULISCHE FAHRZEUGBREMSANLAGE**
ACTUATING DEVICE FOR AN ELECTROHYDRAULIC VEHICLE BRAKE SYSTEM
DISPOSITIF DE COMMANDE DESTINE AU SYSTEME DE FREINAGE ELECTROHYDRAULIQUE D'UN VEHICULE

(30) Priorität: 23.07.1998 DE 19833084
(43) Veröffentlichungstag der Anmeldung: 09.05.2001
(73) Patentinhaber: LUCAS INDUSTRIES PUBLIC LIMITED COMPANY, Solihull B90 4LA (GB)
(72) Erfinder: MOHR, Kurt, D-56283 Halsenbach (DE)
(74) Vertreter: Schmidt, Steffen J., Dipl.-Ing.
(86) Internationale Anmeldenummer: EP9905294
(87) Internationale Veröffentlichungsnummer: WO0005117

(56) Entgegenhaltungen:
- WO-A-96/11129
- DE-A- 3 131 856
- DE-C- 19 638 102
- US-A- 5 022 716
- US-A- 5 544 948

## Beschreibung

Die Erfindung betrifft eine Betätigungsvorrichtung für eine elektrohydraulische Fahrzeugbremsanlage, mit einem Notbremszylinder, in dessen Gehäuse ein mittels eines Bremspedals betätigbar er kolben (24, 25) verschiebbar ist, und einer Simulationseinrichtung zum Simulieren eines Kraft-/Weg-Verhaltens des Bremspedals, wobei die Simulationseinrichtung in Kraftrichtung vom Bremspedal zum Notbremszylinder in Reihe geschaltet hinter dem Notbremszylinder angeordnet ist. Ferner betrifft die Erfindung eine elektrohydraulische Fahrzeugbremsanlage mit einer derartigen Betätigungsvorrichtung, wie sie z.B. US-A-5 544 948 offenbart.

Bei einer elektrohydraulischen Fahrzeugbremsanlage wird beispielsweise am Bremspedal ein Bremswunsch eines Fahrers erfaßt und in Abhängigkeit dieses Bremswunsches sowie gegebenenfalls weiterer Einflußgrößen durch ein (hier nicht weiter erläutertes) elektrohydraulisches System, das mit einer motorisch getriebenen Druckquelle ausgestattet ist, Bremsdruck an Bremsen der Fahrzeugbremsanlage aufgebracht.

Bei einem Ausfall des elektrohydraulischen Systems (beispielsweise bei einem Abfall der Versorgungsspannung im Fahrzeug) wird dieses inaktiv, was zu kritischen Fahrzuständen führen kann, da vom elektrohydraulischen System kein oder nur ein geringer Bremsdruck an den Bremsen aufgebracht werden kann. Damit auch in einem solchen Fall ein Abbremsen des Fahrzeuges zumindest mit einer gesetzlich vorgeschriebenen Mindestverzögerung vorgenommen werden kann, ist üblicherweise neben dem elektrohydraulischen System ein konventionelles hydraulisches Notbetätigungssystem vorgesehen.

In der DE 196 38 102 C1 ist eine Betätigungsvorrichtung der eingangs genannten Art beschrieben, bei der ein Hauptbremszylinder über ein Bremspedal betätigbar ist. Bei inaktivem elektrohydraulischem System ist der Hauptbremszylinder durch Ventilanordnungen mit den Fahrzeugbremsen verbunden, um eine Notbetätigung der Bremsen auszuführen. Bei aktivem elektrohydraulischem System ist der Hauptbremszylinder durch die Ventilanordnungen mit einer Simulationseinrichtung verbunden, die das für den Fahrer erlebbare Kraft-/Weg-Verhalten des Bremspedals entsprechend einer konventionellen, rein hydraulischen Fahrzeugbremsanlage simuliert. Für den Fall eines aktiven elektrohydraulischen Systems besteht eine ständige hydraulische Verbindung zwischen Druckkammern des Hauptbremszylinders und der Simulationseinrichtung. Die Simulationseinrichtung ist also in Kraftrichtung vom Bremspedal zum Hauptbremszylinder in Reihe geschaltet hinter diesem angeordnet. Dabei ist die Simulationseinrichtung dem hohen Druckniveau im Hauptbremszylinder ausgesetzt. Dies führt zu einer starken Belastung von Dichtelementen der Simulationseinrichtung, was deren Lebensdauer und somit die Sicherheit der Fahrzeugbremsanlage vermindert.

Ferner sind beim Betätigen der Simulationseinrichtung die Rückstellkräfte von im Hauptbremszylinder angeordneten Federelementen zu überwinden, wodurch sich die Abstimmung des erlebbaren Kraft-/Weg-Verhaltens des Bremspedals vor allem für den anfänglichen Wegbereich mit geringer Kraft schwierig gestaltet.

Ein weiteres Problem ergibt sich, wenn das elektrohydraulische System inaktiviert wird bzw. ausfällt, während das Bremspedal betätigt ist. In diesem Fall ist die der Fahrzeugbremse zuführbare Bremsfluidmenge um die Bremsfluidmenge verringert, die der Simulationseinrichtung bei noch aktivem elektrohydraulischem System zuvor zugeführt worden ist. Die Bremsleistung bei einer derartigen Notbetätigung ist dadurch eingeschränkt und der Bremsweg des Fahrzeugs unerwünscht lang.

Aufgabe der Erfindung ist es, eine Betätigungsvorrichtung der eingangs genannten Art derart zu verbessern, daß sie die genannten Nachteile überwindet.

Die Aufgabe ist erfindungsgemäß durch eine eingangs beschriebene Betätigungsvorrichtung für eine elektrohydraulische Fahrzeugbremsanlage gelöst, bei der sich der Notbremszylinder an der Simulationseinrichtung derart abstützt und sein Kolben relativ zum Gehäuse derart blockierbar ist, daß die Simulationseinrichtung durch den Notbremszylinder mechanisch betätigbar ist.

Durch die erfindungsgemäße Betätigungsvorrichtung ist die Simulationseinrichtung vom Notbremszylinder hydraulisch entkoppelt, so daß eine Beeinflussung durch den hohen Druck im Notbremszylinder, die sich nachteilig auswirken würde, ausgeschlossen ist. Die Simulationseinrichtung kann im Vergleich zu dem Notbremszylinder auf einem erheblich niedrigeren Druckniveau betrieben werden, wodurch Dichtelemente der Simulationseinrichtung weniger stark belastet werden.

Durch die hydraulische Entkopplung ist beispielsweise auch eine pneumatisch gefederte Simulationseinrichtung möglich. Ein weiterer Vorteil ist, daß die Simulationseinrichtung nicht unbedingt hydraulisch gedämpft sein muß, sondern als eine Simulationseinrichtung mit einer rein mechanischen Federanordnung gestaltet sein kann.

Die erfindungsgemäße Betätigungsvorrichtung sieht vor, daß der Notbremszylinder sich mit seinem Gehäuse an der Simulationseinrichtung abstützt und sein Kolben durch das Bremspedal betätigbar ist. Somit kann die Kopplung zwischen Bremspedal und Notbremszylinder in herkömmlicher Weise ausgebildet sein.

Vorteilhaft ist die Betätigungsvorrichtung weitergebildet, indem die Simulationseinrichtung einen Anschlag aufweist, der gegen die Wirkung wenigstens einer Federanordnung bewegbar ist. Eine derartige Weiterbildung ermöglicht eine Simulationseinrichtung, die ausschließlich mechanisch betätigt ist.

Alternativ oder kombiniert mit der zuletzt beschriebenen Weiterbildung kann die Simulationseinrichtung eine Wand aufweisen, die gegen die Wirkung einer hydraulischen Dämpfung bewegbar ist. Mit einer derartigen Simulationseinrichtung ist eine besonders präzise Simulation des Kraft-/Weg-Verhaltens eines Bremspedals möglich.

Eine erfindungsgemäße Weiterbildung sieht vor, daß der Anschlag bzw. die Wand der Simulationseinrichtung mit dem Gehäuse des Notbremszylinders fest verbunden ist und der Notbremszylinder in einem Gehäuse der Simulationseinrichtung beweglich geführt ist. Vorteilhaft ist dabei, daß die Betätigungsvorrichtung sehr kompakt baut, weil der Notbremszylinder und die Simulationseinrichtung ineinander verschiebbar ausgestaltet sind, so daß verhältnismäßig wenig Einbauraum benötigt wird.

Eine vorteilhafte Ausgestaltung sieht vor, daß die Wand das Gehäuse der Simulationseinrichtung in zwei Arbeitskammern teilt, die mittels wenigstens einer Ventilanordnung gedrosselt verbindbar, ungedrosselt verbindbar oder gegeneinander absperrbar sind. Durch eine derartige Ventilanordnung ist die von der Simulationseinrichtung einer Betätigung des Bremspedals entgegengesetzte Kraft für verschiedene Wegbereiche des Bremspedals anpaßbar.

Indem bei einer vorteilhaften Gestaltung die in den Arbeitskammern der Wand jeweils zugeordneten wirksamen Arbeitsflächen gleich groß sind, ist ein Verschieben der Wand im Gehäuse der Simulationseinrichtung möglich, bei dem das Volumen beider Arbeitskammern zusammen gleich bleibt, so daß kein Hydraulikfluid von außerhalb der Simulationseinrichtung zugeführt werden muß.

Vorteilhaft weitergebildet ist die Betätigungsvorrichtung ferner, indem eine der Arbeitskammern mit einem Reservoir für Hydraulikfluid verbunden ist. Somit ist es möglich, das aus der Arbeitskammer verdrängte Hydraulikfluid in das Reservoir zu fördern und gegebenenfalls auf eine zweite Arbeitskammer zu verzichten.

Eine weitere vorteilhafte Gestaltung sieht vor, daß in einer Leitung zwischen der mit dem Reservoir verbundenen Arbeitskammer und dem Reservoir ein Ventil so angeordnet ist, daß bei aktivem elektrohydraulischem System die Verbindung gesperrt wird, wenn das Bremspedal betätigt wird, und die Verbindung geöffnet wird, wenn die Betätigung des Bremspedals zurückgenommen wird. Durch dieses Ventil, daß beispielsweise als Rückschlagventil ausgebildet sein kann, wird ein Ausströmen von Hydraulikfluid in das Reservoir verhindert, damit das Hydraulikfluid ausschließlich in die zweite Arbeitskammer strömt, wobei die Strömung entsprechend der angestrebten Simulation gedrosselt ist.

Bei einer vorteilhaften Ausgestaltung, bei der durch das Gehäuse des Notbremszylinders und dessen Kolben wenigstens eine Druckkammer gebildet ist, die mit einem Reservoir für Bremsfluid verbunden ist, und bei der das oben genannte Reservoir für Hydraulikfluid mit dem Reservoir für Bremsfluid identisch ist, kann auf ein separates Reservoir für Hydraulikfluid in der Fahrzeugbremsanlage verzichtet werden.

Indem die Simulationseinrichtung relativ zu einer Lagerung des Bremspedals ortsfest angeordnet ist, ist das simulierte Kraft-/ Weg-Verhhalten ausschließlich von der Bewegung des Bremspedals und der Steifheit der Blockierung des Kolbens im Gehäuse des Notbremszylinders abhängig.

Eine Fahrzeugbremsanlage mit einer erfindungsgemäßen Betätigungsvorrichtung weist vorteilhaft ein elektrohydraulisches System zum Betätigen wenigstens einer Fahrzeugbremse auf, wobei der Kolben des Notbremszylinders bei aktivem elektrohydraulischem System blockiert ist, so daß beim Betätigen des Bremspedals ausschließlich die Simulationseinrichtung betätigt wird. Es ist jedoch auch möglich, daß bei aktivem elektrohydraulischem System der Kolben im Notbremszylinder teilweise bewegt wird, um ebenfalls bei der Simulation des Kraft-/Weg-Verhaltens des Bremspedals mitzuwirken.

Ferner ist es bei inaktivem elektrohydraulischem System vorteilhaft, daß die Simulationseinrichtung blockiert ist, so daß sich beim Betätigen des Bremspedals ausschließlich der Kolben des Notbremszylinders bewegt. Hier ist es alternativ möglich, eine hydraulische Simulationseinrichtung als Unterstützung für den Notbremszylinder einzusetzen, wobei durch die Simulationseinrichtung ebenfalls Hydraulikdruck aufgebracht wird.

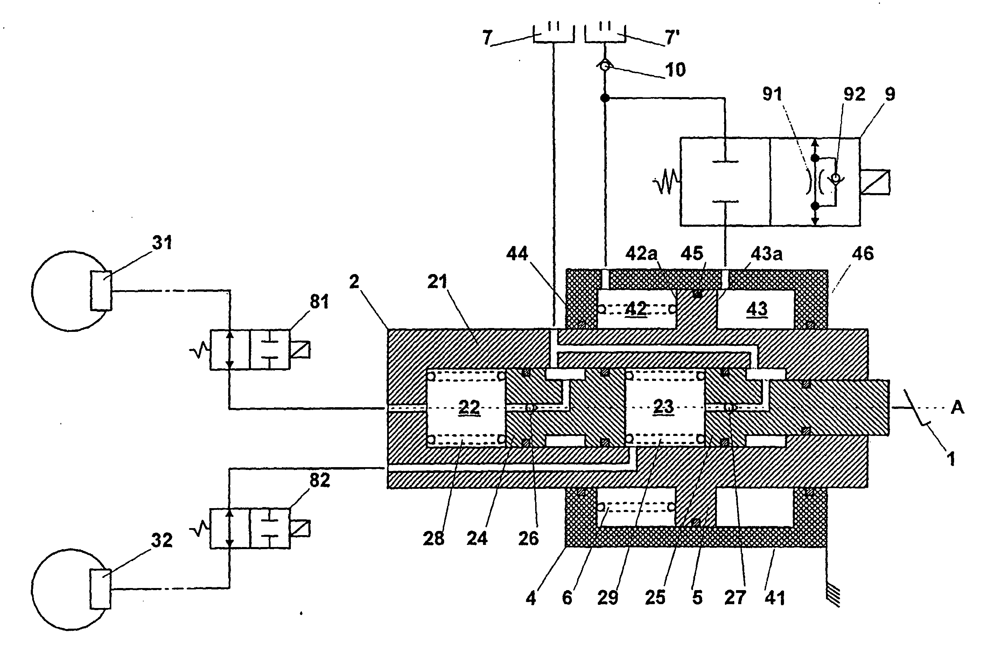

Ein Ausführungsbeispiel einer erfindungsgemäßen Betätigungsvorrichtung wird im folgenden mit Bezug auf die beigefügte einzige Zeichnung erläutert, deren Fig. schematisch eine Fahrzeugbremsanlage mit der im Längsschnitt dargestellten Betätigungsvorrichtung zeigt.

Die Betätigungsvorrichtung ist im wesentlichen rotationssymetrisch in Bezug auf eine Achse A aufgebaut. Sie umfaßt einen Notbremszylinder 2, mit einem Gehäuse 21, in dem zwei axial verschiebbare und hintereinander angeordnete Kolben 24 und 25 angeordnet sind. Der Kolben 25 ragt aus dem Gehäuse 21, ist mit einem Bremspedal 1 mittelbar bzw. unmittelbar gekoppelt und durch dieses betätigbar. Das Gehäuse 21 und die Kolben 24 sowie 25 begrenzen zwei Druckkammern 22 bzw. 23.

Der Kolben 24 ist als Schwimmkolben ausgeführt und über eine zwischen den Kolben 24 und 25 angeordnete Feder 29 mit dem Bremspedal 1 gekoppelt. Dabei ist der Kolben 24 durch eine sich am Gehäuse 21 abstützende Feder 28 gestützt.

Die Druckkammern 22 und 23 sind mit einem Reservoir 7 für Bremsfluid über Leitungen und je ein in einem Kolben 24 und 25 angeordnetes Zentralventil 26 bzw. 27 verbindbar. Die Zentralventile 26 und 27 sind als Rückschlagventile ausgebildet, die bei unbetätigtem Bremspedal 1 geöffnet sind, so daß die Druckkammern 22 und 23 mit dem Reservoir 7 verbunden sind und Bremsfluid in sie einströmen kann. Wird das Bremspedal 1 betätigt, so schließen sich die Zentralventile 26 und 27 aufgrund des in den Druckkammern 22 bzw. 23 erzeugten Drucks, die Verbindung mit dem Reservoir 7 wird unterbrochen und in den Druckkammern 22 bzw. 23 Bremsdruck aufgebaut.

Die Druckkammern 22 und 23 des Notbremszylinders 2 stehen über je ein elektromagnetisch betätigbares Absperrventil 81 bzw. 82 mit je einer Bremse 31 bzw. 32 in Verbindung. Die Absperrventile 81 und 82 sind in eine Grundstellung (in der Zeichnung dargestellt) federnd vorgespannt, in der sie geöffnet sind. In einer betätigten Stellung sind die Absperrventile 81 und 82 geschlossen.

Der Notbremszylinder 2 ist durch sein Gehäuse 21 in einem Gehäuse 41 einer Simulationseinrichtung 4, in Form eines Simulationszylinders, in Richtung längs der Achse A verschiebbar gelagert. Die Simulationseinrichtung 4 ist hier ortsfest in einem (nicht weiter veranschaulichten Fahrzeug) angeordnet. Am äußeren Umfang des Gehäuses 21 ist eine bewegliche Wand 5 (oder alternativ ein Anschlag bzw. Bund) befestigt oder einstückig ausgebildet, die das Gehäuse 41 in zwei Arbeitskammern 42 sowie 43 unterteilt. Die Arbeitskammern 42 und 43 sind mittels Dichtelementen 44 und 46 zwischen dem Gehäuse 21 und dem Gehäuse 41 sowie einem Dichtelement 45 zwischen der Wand 5 und dem Gehäuse 41 abgedichtet.

Zur Simulation des Kraft-/Weg-Verhaltens des Bremspedals 1 ist unter anderem zwischen dem Gehäuse 41 und der Wand 5 ein Federelement 6 vorgesehen, das einer Bewegung der Wand 5 (bezogen auf die Fig. nach links, was der Betätigungsrichtung des Bremspedals 1 entspricht) entgegenwirkt. Das Federelement 6 weist eine progressive Federkennlinie auf, um das Kraft-/Weg-Verhalten besonders realistisch zu simulieren. Statt eines Federelementes können alternativ auch mehrere parallel und/oder seriell geschaltete Federelemente als Federanordnung eingesetzt werden, um die gewünschte Federkennlinie zu realisieren.

Die Simulationseinrichtung 4 wird außer durch das Federelement 6 auch hydraulisch gedämpft. Dazu ist die Arbeitskammer 42 wahlweise mit einem weiteren Reservoir 7' für Hydraulikfluid verbindbar. Es besteht die Möglichkeit das Reservoir 7 und das weitere Reservoir 7' zu einem gemeinsamen Reservoir zusammenzufassen, so daß auch die Simulationseinrichtung 4 mit Bremsfluid versorgt wird.

Die Arbeitskammern 42 und 43 der Simulationseinrichtung 4 sind durch eine Leitung verbunden, in der eine elektromagnetisch betätigbare Duchlaßventilanordnung 9 angeordnet ist. Die Durchlaßventilanordnung 9 ist in eine Grundstellung vorgespannt, in der sie geschlossen ist, und in eine Betätigungsstellung überführbar, in der sie durchläßt.

Befindet sich die Durchlaßventilanordnung 9 in ihrer durchlassenden Betätigungsstellung, so wird bei einer Betätigung des Bremspedals 1 die Wand 5 (bezogen auf die Fig. nach links) gegen das Federelement 6 verschoben, wobei sich das Volumen der Arbeitskammer 42 verkleinert und gleichzeitig das Volumen der Arbeitskammer 43 vergrößert. Dadurch wird Hydraulikfluid aus der Arbeitskammer 42 in die Arbeitskammer 43 verdrängt. Um zu verhindern, daß dabei Hydraulikfluid in das Reservoir 7' zurückströmt, ist in der Leitung zwischen der Arbeitskammer 42 und dem Reservoir 7' ein Rückschlagventil 10 angeordnet, das nur in einer Durchlaßrichtung von dem Reservoir 7' zu der Arbeitskammer 42, jedoch nicht in entgegengesetzter Richtung, öffnet.

In der durchlassenden Betätigungsstellung stellt die Ventilanordnung 9 eine Drossel 91 bereit, zu der ein Rückschlagventil 92 parallelgeschaltet ist. Dabei ist die Durchlaßrichtung des Rückschlagventils 92 so gewählt, daß bei einer Betätigung des Bremspedals 1 - wenn Hydraulikfluid von der Arbeitskammer 42 zu der Arbeitskammer 43 strömt - ein Durchlaß nur durch die Drossel 91 besteht. Bei einer Betätigung des Bremspedals 1 ist die Strömung des Hydraulikfluids zwischen den Arbeitskammern 42 und 43 dadurch gedrosselt, was einer hydraulischen Dämpfung entspricht. Damit ist die Simulation des Kraft-/Weg-Verhaltens des Bremspedals 1 beim Betätigen besonders realistisch gestaltet.

Demgegenüber ist beim Zurücknehmen der Betätigung des Bremspedals 1 die Drossel 91 durch das in diesem Fall durchlassende Rückschlagventil 92 überbrückt, so daß eine ungedrosselte Verbindung zwischen den Arbeitskammern 42 und 43 besteht. Somit stellt sich beim Betätigen des Bremspedals 1 ein stärker gedämpftes Kraft-/Weg-Verhalten als beim Zürücknehmen der Betätigung ein. Dabei ist das Maß der Dämpfung durch Bemessen der Drossel 92 (insbesondere deren Strömungsquerschnitts) veränderbar.

Sofern eine besonders angepaßte Dämpfung des Kraft-/Weg-Verhaltens auch bei Zurücknahme der Betätigung des Bremspedals 1 gewünscht ist, kann eine weitere Drossel zum Rückschlagventil 92 in Serie geschaltet sein. In diesem Zusammenhang bietet sich auch die Verwendung einer Ventilanordnung 9 an, deren Strömungsquerschnitt in der durchlassenden Betätigungsstellung variabel einstellbar ist.

Damit die Simulation des Kraft-/Weg-Verhaltens des Bremspedals 1 nicht durch an der Wand 5 wirkende Differenzdruckkräfte nachteilig beeinträchtigt wird, sind die den Arbeitskammern 42 und 43 an der Wand 5 jeweils zugeordneten Arbeitsflächen 42a bzw. 43a gleich groß. Dadurch erfolgt eine druckausgeglichene Verschiebung der Wand 5 in der Simulationseinrichtung 4, bei der die aus der Arbeitskammer 42 ausströmende Hydraulikfluidmenge genau der in die Arbeitskammer 43 eingesaugten Hydraulikfluidmenge entspricht.

### Die Betätigungsvorrichtung funktioniert folgendermaßen:

Bei aktivem (fehlerfreiem) elektrohydraulischem System (nicht dargestellt) sind die Absperrventile 81 und 82 betätigt, so daß die Leitungen zwischen den Druckkammern 22 bzw. 23 des Notbremszylinders 2 und den Bremsen 31 bzw. 32 abgesperrt sind. In diesem Fall wird der Bremsdruck an den Bremsen 31 und 32 über das elektrohydraulische System eingestellt. Gleichfalls ist die Ventilanordnung 9 betätigt, um eine Verbindung durch die Leitung zwischen den Arbeitskammern 42 und 43 der Simulationseinrichtung 4 herzustellen.

Beim Betätigen des Bremspedals 1 sperren die Zentralventile 26 und 27 die Leitungen zum Reservoir 7. Wie oben beschrieben sind die Absperrventile 81 und 82 bei aktivem elektrohydraulischem System in ihrer absperrenden Betätigungsstellung, so daß die Druckkammern 22 bzw. 23 des Notbremszylinders 2 hydraulisch abgeschlossen sind. Der Notbremszylinder 2 - d.h. dessen Kolben 24 oder 25 in dem Gehäuse 21 - ist dadurch blockiert. Eine Betätigung des Bremspedals 1 bewirkt damit ausschließlich eine Verschiebung des Gehäuses 21 des Notbremszylinders 2 in dem Gehäuse 41 der Simulationseinrichtung 4, wobei die Wand 5 bezogen auf die Fig. nach links bewegt wird.

Somit findet die Simulation des Kraft-/Weg-Verhaltens des Bremspedals 1 vollkommen hydraulisch entkoppelt von einer Betätigung des Notbremszylinders 2 statt, wodurch eine nachteilige Beeinträchtigung durch Reaktionskräfte ausgeschlossen wird. Vor allem ist eine Belastung der Dichtelemente 44, 45 und 46 durch den hohen im Notbremszylinder 2 erzeugten Druck ausgeschlossen.

Tritt nun ein Fehler in dem elektrohydraulischen System auf, so wird die Betätigung der Absperrventile 81 und 82 sowie der Ventilanordnung 9 zurückgenommen, um das elektrohydraulische System zu inaktivieren und das Notbetätigungssystem zu aktivieren. Dieser Zustand entspricht den Grundstellungen der Absperrventile 81 und 82 sowie der Ventilanordnung 9, so daß er auch bei einem Ausfall der Versorgungsspannung selbsttätig eingenommen wird.

Bei inaktivem elektrohydraulischem System ist somit je eine Verbindung der Druckkammern 22 und 23 des Notbremszylinders 2 mit den Bremsen 31 bzw. 32 hergestellt. Die Leitung zwischen den Arbeitskammern 42 und 43 der Simulationseinrichtung 4 ist abgesperrt, weil sich hierbei die Ventilanordnung 9 in ihrer absperrenden Stellung befindet. Die Arbeitskammern 42 und 43 sind dadurch hydraulisch abgeschlossen, so daß die Wand 5 in dem Gehäuse 41 der Simulationseinrichtung 4 blockiert ist. Daher bewirkt ein Betätigen des Bremspedals 1 in diesem Fall ausschließlich eine Verschiebung der Kolben 24 und 25 im Gehäuse 21 des Notbremszylinders 2, wobei der Notbremszylinder 2 derart betätigt wird, daß an den Bremsen 31 und 32 Bremsdruck aufgebracht wird. Somit findet die Notbetätigung vollkommen entkoppelt von der Simulation des Kraft-/Weg-Verhaltens des Bremspedals 1 statt, wodurch jegliche nachteilige Beeinträchtigung der Bremsleistung bei einer Notbetätigung ausgeschlossen ist.

## Patentansprüche

1. Betätigungsvorrichtung für eine elektrohydraulische Fahrzeugbremsanlage, mit
- einem Notbremszylinder (2), in dessen Gehäuse (21) ein mittels eines Bremspedals (1) betätigbarer Kolben (24, 25) verschiebbar ist, und
- einer Simulationseinrichtung (4) zum Simulieren eines Kraft-/Weg-Verhaltens des Bremspedals (1), wobei
- die Simulationseinrichtung (4) in Kraftrichtung vom Bremspedal (1) zum Notbremszylinder (2) in Reihe geschaltet hinter dem Notbremszylinder (2) angeordnet ist,
**dadurch gekennzeichnet, daß**
- sich der Notbremszylinder (2) mit seinem Gehäuse (21) an der Simulationseinrichtung (4) derart abstützt und der Kolben (24, 25) relativ zum Gehäuse (21) derart blockierbar ist, daß die Simulationseinrichtung (4) durch den Notbremszylinder (2) mechanisch betätigbar ist.

2. Betätigungsvorrichtung nach Anspruch 1,
**dadurch gekennzeichnet, daß**
- die Simulationseinrichtung (4) einen Anschlag (5) aufweist, der gegen die Wirkung wenigstens einer Federanordnung (6) bewegbar ist.

3. Betätigungseinrichtung nach Anspruch 1 oder 2,
**dadurch gekennzeichnet, daß**
- die Simulationseinrichtung (4) eine Wand (5) aufweist, die gegen die Wirkung einer hydraulischen Dämpfung bewegbar ist.

4. Betätigungsvorrichtung nach Anspruch 2 oder 3,
**dadurch gekennzeichnet, daß**
- der Anschlag bzw. die Wand (5) der Simulationseinrichtung (4) mit dem Gehäuse (21) des Notbremszylinders (2) fest verbunden ist und der Notbremszylinder (2) in einem Gehäuse (41) der Simulationseinrichtung (4) beweglich geführt ist.

5. Betätigungsvorrichtung nach Anspruch 3,
**dadurch gekennzeichnet, daß**
- die Wand (5) ein/das Gehäuse (41) der Simulationseinrichtung (4) in zwei Arbeitskammern (42, 43) teilt, die mittels wenigstens einer Ventilanordnung (9) gedrosselt verbindbar, ungedrosselt verbindbar oder gegeneinander absperrbar sind.

6. Betätigungsvorrichtung nach Anspruch 5,
**dadurch gekennzeichnet, daß**
- die mit der Wand (5) jeweils zugeordneten wirksamen Arbeitsflächen (42a, 43a) gleich groß sind.

7. Betätigungsvorrichtung nach Anspruch 5 oder 6,
**dadurch gekennzeichnet, daß**
- eine der Arbeitskammern (42, 43) mit einem Reservoir (7') für Hydraulikfluid verbunden ist.

8. Betätigungsvorrichtung nach Anspruch 7,
**dadurch gekennzeichnet, daß**
- in einer Leitung zwischen der mit dem Reservoir (7') verbundenen Arbeitskammer (42, 43) und dem Reservoir (7') ein Ventil (10) so angeordnet ist, daß
- bei aktivem elektrohydraulischem System die Leitung gesperrt wird, wenn das Bremspedal (1) betätigt wird, und die Verbindung geöffnet wird, wenn die Betätigung des Bremspedals (1) zurückgenommen wird.

9. Betätigungsvorrichtung nach Anspruch 7 oder 8,
**dadurch gekennzeichnet, daß**
- durch das Gehäuse (21) des Notbremszylinders (2) und dessen Kolben (24, 25) wenigstens eine Druckkammer (22, 23) gebildet ist, die mit einem Reservoir (7) für Bremsfluid verbunden ist, wobei das Reservoir (7) mit dem Reservoir (7') identisch ist.

10. Betätigungsvorrichtung nach einem der Ansprüche 1 bis 9,
**dadurch gekennzeichnet, daß**
- das Gehäuse (41) der Simulationseinrichtung (4) relativ zu einer Lagerung des Bremspedals (1) ortsfest angeordnet ist.

11. Betätigungsvorrichtung für eine elektrohydraulische Fahrzeugbremsanlage, mit
- einem mittels eines Bremspedals (1) betätigbaren Notbremszylinder (2), in dessen Gehäuse (21) ein verschiebbarer Kolben (24, 25) angeordnet ist, und
- einer Simulationseinrichtung (4) zum Simulieren eines Kraft-/Weg-Verhaltens des Bremspedals (1), wobei
- die Simulationseinrichtung (4) in Kraftrichtung vom Bremspedal (1) zum Notbremszylinder (2) in Reihe geschaltet hinter dem Notbremszylinder (2) angeordnet ist,
**dadurch gekennzeichnet, daß**
- das Gehäuse (21) des Notbremszylinders (2) durch das Bremspedal (1) betätigbar ist und
- sich der Notbremszylinder (2) mit seinem Kolben (24, 25) an der Simulationseinrichtung (4) derart abstützt und der Kolben (24, 25) relativ zum Gehäuse (21) derart blockierbar ist, daß die Simulationseinrichtung (4) durch den Notbremszylinder (2) mechanisch betätigbar ist.

12. Elektrohydraulische Fahrzeugbremsanlage,
**gekennzeichnet durch**
- eine Betätigungsvorrichtung nach einem der Ansprüche 1 bis 11.

13. Fahrzeugbremsanlage nach Anspruch 12,
**gekennzeichnet durch**
- ein elektrohydraulisches System zum Betätigen wenigstens einer Fahrzeugbremse (31, 32), wobei
- der Kolben (24, 25) des Notbremszylinders (2) bei aktivem elektrohydraulischem System blockiert ist.

14. Fahrzeugbremsanlage nach Anspruch 13,
**dadurch gekennzeichnet, daß**
- bei inaktivem elektrohydraulischem System die Simulationseinrichtung (4) blockiert ist, so daß sich beim Betätigen des Bremspedals (1) ausschließlich der Kolben (24, 25) des Notbremszylinders (2) bewegt.

## Claims

1. Actuating device for an electrohydraulic vehicle brake system, comprising
- an emergency brake cylinder (2), in the housing (21) of which a piston (24, 25) to be actuated by means of a brake pedal (1), can be displaced, and
- a simulation device (4) for simulating a force/displacement action of the brake pedal (1), wherein
- the simulation device (4) is connected in series and disposed after the emergency brake cylinder (2) in the direction of force from the brake pedal (1) to the emergency brake cylinder (2),
**characterised in that**
- the emergency brake cylinder (2) is supported with its housing (21) at the simulation device (4) and the piston (24, 25) can be locked relative to the housing (21) such that the simulation device (4) can be mechanically actuated by the emergency brake cylinder (2).

2. Actuating device according to Claim 1,
**characterised in that**
- the simulation device (4) comprises a stop (5) which is movable against the action of at least one spring arrangement (6).

3. Actuating device according to Claim 1 or 2,
**characterised in that**
- the simulation device (4) comprises a wall (5) which is movable against the action of hydraulic damping.

4. Actuating device according to Claim 2 or 3,
**characterised in that**
- the stop or the wall (5) of the simulation device (4) is firmly connected to the housing (21) of the emergency brake cylinder (2), and the emergency brake cylinder (2) is guided so as to be movable in a housing (41) of the simulation device (4).

5. Actuating device according to Claim 3,
**characterised in that**
- the wall (5) divides a/the housing (41) of the simulation device (4) into two working chambers (42, 43) which can be connected in throttled fashion, unthrottled fashion or shut off from one another by means of at least one valve arrangement (9).

6. Actuating device according to Claim 5,
**characterised in that**
- the effective working faces (42a, 43a) in each case associated with the wall (5) are of equal size.

7. Actuating device according to Claim 5 or 6,
**characterised in that**
- one of the working chambers (42, 43) is connected to a reservoir (7') for hydraulic fluid.

8. Actuating device according to Claim 7,
**characterised in that**
- a valve (10) is disposed in a line between the working chamber (42, 43) connected to the reservoir (7') and the reservoir (7') such that
- with active electrohydraulic system, the line is blocked when the brake pedal (1) is actuated and the connection is opened when the actuation of the brake pedal (1) is eased off.

9. Actuating device according to Claim 7 or 8,
**characterised in that**
- at least one pressure chamber (22, 23) is defined by the housing (21) of the emergency brake cylinder (2) and the piston (24, 25) thereof, which chamber (22, 23) is connected to a reservoir (7) for brake fluid, the reservoir (7) being identical to the reservoir (7').

10. Actuating device according to one of Claims 1 to 9,
**characterised in that**
- the housing (41) of the simulation device (4) is disposed such that it is stationary relative to a mounting of the brake pedal (1).

11. Actuating device for an electrohydraulic vehicle brake system, comprising
- an emergency brake cylinder (2) which can be actuated by means of a brake pedal (1) and in the housing (21) of which a displaceable piston (24, 25) is disposed, and
- a simulation device (4) for simulating a force/displacement action of the brake pedal (1), wherein
- the simulation device (4) is connected in series and disposed after the emergency brake cylinder (2) in the direction of force from the brake pedal (1) to the emergency brake cylinder (2),
**characterised in that**
- the housing (21) of the emergency brake cylinder (2) can be actuated by the brake pedal (1) and
- the emergency brake cylinder (2) is supported with its piston (21, 25) at the simulation device (4) and the piston (24, 25) can be locked relative to the housing (21) such that the simulation device (4) can be mechanically actuated by the emergency brake cylinder (2).

12. Electrohydraulic vehicle brake system,
**characterised by**
- an actuating device according to one of Claims 1 to 11.

13. Vehicle brake system according to Claim 12,
**characterised by**
- an electrohydraulic system for actuating at least one vehicle brake (31, 32), wherein
- the piston (24, 25) of the emergency brake cylinder (2) is locked when the electrohydraulic system is active.

14. Vehicle brake system according to Claim 13,
**characterised in that**
- the simulation device (4) is locked when the electrohydraulic system is inactive, so that only the piston (24, 25) of the emergency brake cylinder (2) moves when the brake pedal (1) is actuated.

## Revendications

1. Dispositif d'actionnement pour un système de freinage de véhicule électro-hydraulique, comprenant
- un cylindre de freinage de secours (2) dans le boîtier (21) duquel un piston (24, 25) pouvant être actionné au moyen d'une pédale de frein (1) peut coulisser et
- un dispositif de simulation (4) pour simuler un comportement
- force - trajet de la pédale de frein (1), dans lequel
- le dispositif de simulation (4) est disposé dans la direction de la transmission de force de la pédale de frein (1) au cylindre de frein de secours (2) en série derrière le cylindre de frein de secours (2),
**caractérisé en ce que**
- le cylindre de frein de secours (2) s'appuie avec son boîtier (21) sur le dispositif de simulation (4) de telle manière et le piston (24, 25) peut être bloqué par rapport au boîtier (21) de telle manière que le dispositif de simulation (4) puisse être actionné mécaniquement par le cylindre de frein de secours (2).

2. Dispositif d'actionnement selon la revendication 1,
**caractérisé en ce que**
- le dispositif de simulation (4) présente un arrêt (5) qui peut se déplacer contre l'effet d'un dispositif élastique (6).

3. Dispositif d'actionnement selon la revendication 1 ou 2,
**caractérisé en ce que**
- le dispositif de simulation (4) présente une paroi (5) qui peut se déplacer contre l'effet d'un amortissement hydraulique.

4. Dispositif d'actionnement selon la revendication 2 ou 3,
**caractérisé en ce que**
- l'arrêt et / ou la paroi (5) du dispositif de simulation (4) est relié de façon rigide au boîtier (21) du cylindre de frein de secours (2) et le cylindre de frein de secours (2) est guidé mobile dans un boîtier (41) du dispositif de simulation (4).

5. Dispositif d'actionnement selon la revendication 3,
**caractérisé en ce que**
- la paroi (5) subdivise un / le boîtier (41) du dispositif de simulation (4) en deux chambres de travail (42, 43) qui peuvent être raccordées avec étranglement, peuvent être raccordées sans étranglement ou peuvent être coupées l'une de l'autre au moyen d'au moins un dispositif de vanne (9).

6. Dispositif d'actionnement selon la revendication 5,
**caractérisé en ce que**
- les surfaces de travail efficaces (42a, 43a) associées respectivement à la paroi (5) ont la même grandeur.

7. Dispositif d'actionnement selon la revendication 5 ou 6,
**caractérisé en ce que**
- une des chambres de travail (42, 43) est reliée à un réservoir (7') pour fluide hydraulique.

8. Dispositif d'actionnement selon la revendication 7,
**caractérisé en ce que**
- une vanne (10) est disposée dans une conduite qui se trouve entre la chambre de travail (42, 43) reliée au réservoir (7') et le réservoir (7') de telle façon que
- lorsque le système électro-hydraulique est actif, le conduit soit fermé lorsque la pédale de frein (1) est actionnée, et la communication soit ouverte lorsque l'actionnement de la pédale de frein (1) est réduit.

9. Dispositif d'actionnement selon la revendication 7 ou 8,
**caractérisé en ce que**
- au moins une chambre de pression (22, 23) est formée par le boîtier (21) du cylindre de frein de secours (2) et son piston (24, 25), qui est reliée à un réservoir (7) pour fluide de freinage, le réservoir (7) étant identique au réservoir (7').

10. Dispositif d'actionnement selon l'une quelconque des revendications 1 à 9,
**caractérisé en ce que**
- le boîtier (41) du dispositif de simulation (4) est disposé fixe par rapport à un palier de la pédale de frein (1).

11. Dispositif d'actionnement pour un système de freinage de véhicule électro-hydraulique, comprenant
- un cylindre de freinage de secours (2) dans le boîtier (21) duquel un piston (24, 25) pouvant être actionné au moyen d'une pédale de frein (1) peut coulisser et
- un dispositif de simulation (4) pour simuler un comportement
- force - trajet de la pédale de frein (1), dans lequel
- le dispositif de simulation (4) est disposé dans la direction de la transmission de force de la pédale de frein (1) au cylindre de frein de secours (2) en série derrière le cylindre de frein de secours (2),
**caractérisé en ce que**
- le boîtier (21) du cylindre de frein de secours (2) peut être actionné par la pédale de frein (1) et
- le cylindre de frein de secours (2) s'appuie avec son piston (24, 25) sur le dispositif de simulation (4) de telle manière et le piston (24, 25) peut être bloqué par rapport au boîtier (21) de telle manière que le dispositif de simulation (4) puisse être actionné mécaniquement par le cylindre de frein de secours (2).

12. Système de freinage électro-hydraulique de véhicule,
**caractérisé par**
- un dispositif d'actionnement selon l'une quelconque des revendications 1 à 11.

13. Système de freinage de véhicule selon la revendication 12,
**caractérisé par**
- un système électro-hydraulique pour actionner au moins un frein de véhicule (31, 32), dans lequel
- le piston (24, 25) du cylindre de frein de secours (2) est bloqué lorsque le système électro-hydraulique est actif.

14. Système de freinage de véhicule selon la revendication 13,
**caractérisé en ce que**
- lorsque le système électro-hydraulique est inactif, le dispositif de simulation (4) est bloqué de telle façon que lors d'un actionnement de la pédale de frein (1) seul le piston (24, 25) du cylindre de frein de secours (2) se déplace.
